# EUROPÄISCHE PATENTSCHRIFT

(11) **EP 0 849 493 B1**
(45) Veröffentlichungstag und Bekanntmachung des Hinweises auf die Patenterteilung: **13.11.2002**
(21) Anmeldenummer: 97121816.9
(22) Anmeldetag: 11.12.1997
(51) Int. Cl.: F16F 13/10

(54) **Selbstschaltendes Hydrauliklager mit akustischer Abkopplung**
Self-switching hydraulic support with acoustic decoupling
Support hydraulique auto-commutant, avec découplage acoustique

(30) Priorität: 17.12.1996 DE 19652501
(43) Veröffentlichungstag der Anmeldung: 24.06.1998
(73) Patentinhaber: ContiTech Vibration Control GmbH, 30165 Hannover (DE)
(72) Erfinder: Heitzig, Jürgen, 31535 Neustadt (DE)
(74) Vertreter: Schneider, Egon

(56) Entgegenhaltungen:
- EP-A- 0 407 760
- EP-A- 0 568 340
- DE-A- 3 142 673
- DE-A- 4 036 517
- FR-A- 2 573 156
- GB-A- 814 748
- GB-A- 2 144 824
- GB-A- 2 272 040

## Beschreibung

Die Erfindung betrifft ein selbstschaltendes Hydrauliklager mit akustischer Abkopplung, gemäß dem Oberbegriff des Patentanspruchs 1 (siehe DE-A- 3 142 673).

Hydrauliklager dienen zur elastischen Abstützung von Aggregaten, insbesondere von Kraftfahrzeugmotoren.

In ihrer Grundversion bestehen derartige Hydrauliklager üblicherweise aus einem Gummifederelement in Verbindung mit einem hydraulischen Dämpfer. Dabei besteht der hydraulische Dämpfer wiederum aus einer Hydraulikkammer, die durch eine mit Drosselöffnung(en) versehene Trennwand in eine Arbeitskammer und eine Ausgleichskammer unterteilt ist.

Mit Hilfe von solchen Hydrauliklagern, die sich zwischen Fahrzeugmotor und Chassis befinden, soll einerseits verhindert werden, daß sich Motor-Vibrationen auf das Chassis übertragen. Andererseits sollen die mit dem Fahrbetrieb gegebenen Erschütterungen gar nicht oder nur gedämpft vom Chassis an den Motor gelangen können.

Um diese verschiedenen Schwingungen und Vibrationen zu minimieren, hat es sich in der Praxis als sinnvoll erwiesen, die höherfrequenten Schwingungskomponenten lediglich der Wirkung des elastischen (Gummi-)Federelements zu unterwerfen, während bei den tiefefrequenten, mit größerer Amplitude behafteten Auslenkungen außer dem mehr oder weniger rein elastischen Federelement in entscheidendem Maße auch das hydraulische Dämpfungselement zur Wirkung gelangt.

Um die unterschiedlichen Schwingungsformen auch entsprechend unterschiedlich behandeln zu können, sind sogenannte selbstschaltende Hydrauliklager entwickelt worden. Bei dem in der DE 27 18 121 beschriebenen Zweikammer-Motorlager geht man von der Erkenntnis aus, daß tiefere Frequenzen bei gleicher Schwingungsenergie mit größerer Amplitude einhergehen. Größere Amplituden bauen in der Hydraulikkammer einen größeren Druck auf. Dieser Druck dient als Stellgröße zur Steuerung der Drosselöffnung. D. h.: Bei großen Druckdifferenzen kann die Wirkung der Hydraulikkomponente entsprechend erhöht werden, während kleine Amplituden weitgehend ungedämpft bleiben.

Das Ziel, eine verbesserte Stoßabsorption und Energieaufzehrung bei unterschiedlichsten Schwingungsformen individuell zu erreichen, wurde in der Folgezeit mit diversen Vorschlägen mehr oder weniger erfolgreich zu erreichen versucht.

Dabei hat es sich als nachteilig erwiesen, daß die volle Dämpfungswirkung erst nach Durchlaufen eines dämpfungslosen Freiwegs einsetzt. Dies bedeutet, daß bei nur geringfügig über der vorgegebenen Schwelle liegenden Amplitude noch keine volle Dämpfung gegeben ist. Versucht man hingegen, dieses Manko durch eine entsprechend steilere Kennlinie zu beseitigen, so ergeben sich üblicherweise in verstärktem Maße akustische Probleme.

Die damit verbundenen Schwierigkeiten sollen gemäß der in der DE-PS 31 42 673 beschriebenen Erfindung dadurch ausgeräumt werden, daß in den Strömungsweg einer in üblicher Weise beschaffenen Freiwegeinrichtung ein Drosselrückschlagventil so eingesetzt ist, daß dieses zwar beim Einfedern des Lagers öffnet, in umgekehrter Richtung aber das sofortige Zurückströmen der vorher ausgeschobenen Luft in den Freiwegraum verhindert. Auf diese Weise können die akustischen Auswirkungen zwar beträchtlich verringert, aber nicht völlig eliminiert werden.

Entsprechend der DE-PS 32 10 731 wird das akustische Verhalten des Lagers mit Hilfe einer Druckluftbeaufschlagung der die Ausgleichskammer begrenzenden Membran verbessert.

Die DE 34 19 851 befaßt sich ebenfalls mit dem Thema, die erwünschten Dämpfungseigenschaften elastischer Lager mit der akustischen Sperrwirkung herkömmlicher ungedämpfter Lager zu vereinen. Zu diesem Zweck ist hierbei die die Ausgleichskammer begrenzende Membran mit einem Unterdruck - relativ zur Außenatmosphäre - beaufschlagbar.

Entsprechend der DE-PS 34 41 592 ist nicht nur die die Ausgleichskammer begrenzende Membran mit Luftdruck beaufschlagbar, sondern auch die mit einer Membran nach oben begrenzte Arbeitskammer kann mit Luftdruck beaufschlagt werden. Auf diese Weise können unterschiedliche Betriebszustände geschaffen werden. Auch ist hiermit eine verbesserte akustische Entkopplung <Sperrwirkung) gegeben. Für die Beaufschlagung mit Luftdruck sind jedoch externe Hilfsaggregate erforderlich.

In der europäischen Patentanmeldung 0 407 760 A3 wird vorgeschlagen, der die Hydraulikkammer unterteilende Trennwand eine Schaumstoffauflage zuzuordnen. Hiervon verspricht man sich bei höheren Frequenzen außer einer Entkopplung der Hydraulikdämpfung auch eine Verbesserung des akustischen Verhaltens.

Die Vielzahl der verschiedenen Lösungsansätze läßt vermuten, daß ein optimales Hydrauliklager, welches sowohl bezüglich Steuerbarkeit als auch bezüglich akustischer Sperrwirkung völlig zufriedenstellend arbeitet, noch nicht zur Verfügung steht.

Die vorliegende Erfindung zielt auf eine weitere Verbesserung der akustischen Entkopplung bei einem selbstschaltenden bzw. einem extern beeinflußbaren Hydrauliklager ab.

Bei einem gattungsgemäßen Hydrauliklager wird das angestrebte Ziel mittels der im Kennzeichen des Anspruchs 1 aufgezählten Merkmale gelöst. Vorteilhafte Weiterbildungen ergeben sich aus den Unteransprüchen.

Bei nennenswerten Bewegungen wird - wie bei der bekannten ßauart - die Hydraulikeinheit angehoben. Bei Berührung mit der Tragkörpereinheit wird aber eine weiche, akustische Abkopplung durch noppen- oder warzenähnliche Vorsprünge oder durch axiale und/oder radiale Rillen erreicht. Dabei werden die Parameter der Abkopplung durch die Nachgiebigkeit der Noppen und der eingeschlossenen Luft bestimmt.

Bei angehobenen Membran öffnet sich das Rückschlagventil Damit ist kein weiteres Ansaugen möglich wodurch eine Verminderung der weichen akustischen Ankopplung verhindert wird.

Nachfolgend wird der Gegenstand der Erfindung anhand der beigefügten Zeichnungen erläutert.

Die Figuren 1 und 2 zeigen zwei verschiedene Ausführungsformen des erfindungsgemäßen Hydrauliklagers im Längsschnitt.
Fig. 3 zeigt eine Weiterbildung der in Fig. 1 dargestellten Ausführungsform, ebenfalls im Längsschnitt.
Fig. 4 zeigt ein vorbekanntes Hydrauliklager.

Die in den Abbildungen dargestellten Lager 2 sind aus einem zweiteiligen, topfartigen ersten (unteren) Anschlußstück 6a, 6b und einem über ein hohlkegeliges (kegelmantel- bis ringförmiges) Federelement 4 elastisch dagegen abgestützten zweiten (oberen) Anschlußstück 8 aufgebaut. Das untere Anschlußstück 6a, 6b dient zur Aufnahme einer zweiteiligen, aus erstem Teilraum 16 und zweitem Teilraum 18 bestehenden, mit Dämpfungsflüssigkeit gefüllten Dämpfungskammer 10. Erster 16 und zweiter Teilraum 18 sind mittels einer mit Drosselöffnung 12 versehenen Trennwand 14 gegeneinander abgeteilt. Der erste (untere) Teilraum 16 ist gegenüber dem Außenraum durch eine Gummimembran 20 abgedichtet. Das zweite (obere) Anschlußstück 8 weist einen Hohlraum 22 auf, der in Richtung auf die Dämpfungskammer 10 durch eine mit einer Durchbrechung 30 versehenen Anschlagscheibe 24 begrenzt ist.

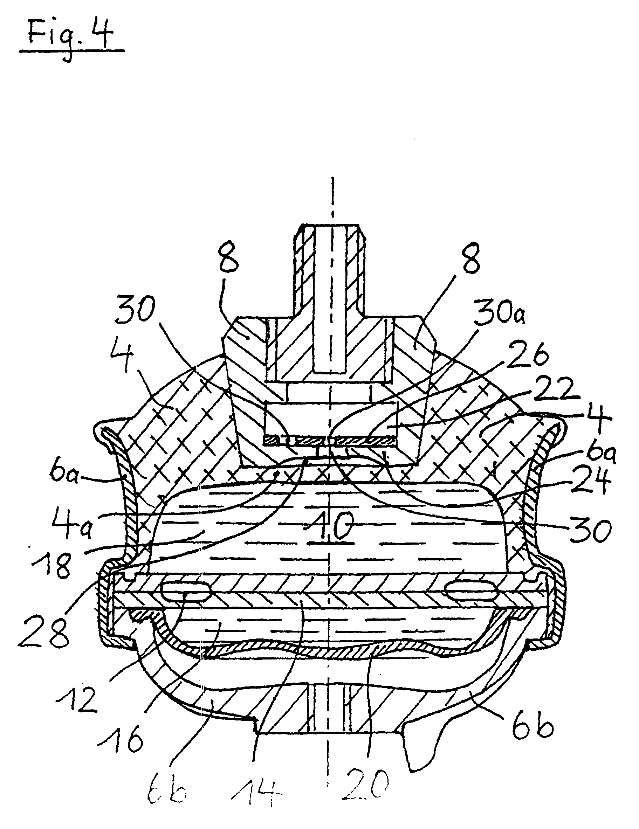

In dem entsprechend dem Stand der Technik in Fig. 4 dargestellten Lager 2 steht die Anschlagscheibe 24 mit einer biegsamen Auflage 26 nach Art eines Rückschlagventils in Wirkverbindung Ein zwischen Anschlagscheibe 24 und membranartiger Verlängerung 4a des Federelements 4 gebildeter Freiwegraum 28 steht über ventilartig wirkende Durchbrechungen 30 mit dem Hohlraum 22 in Verbindung.

Mit Auftreten größerer Amplituden, wie sie bei tiefsten Frequenzen vorkommen, wölbt sich die membranartige Verlängerung 4a des Federelements 4 in den Freiwegraum 28 in Richtung auf die Anschlagscheibe 24. Dabei wird die biegsame Auflage 26 von der Anschlagscheibe 24 abgehoben, so daß Luft aus dem Freiwegraum 28 durch die verschiedenen Öffnungen 30 nahezu ungehindert in den Hohlraum 22 überströmen kann. In umgekehrter Strömungsrichtung, d. h. bei entgegensetzten Druckverhältnissen, erfolgt ein Druckausgleich nur über eine enge Öffnung 30a, wodurch sich nur eine verlangsamte Rückstellung der membranartigen Verlängerung 4a des Federelements 4 in die Ausgangslage ergibt.

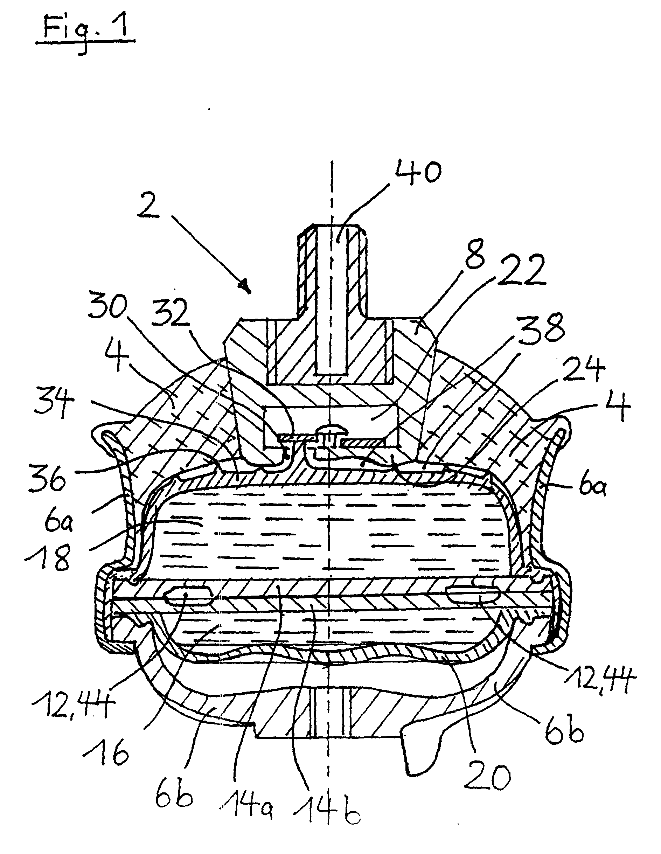

Bei den in den Figuren 1 - 3 dargestellten erfindungsgemäßen Weiterbildungen des aus dem Stand der Technik bekannten Lagers 2 ist nicht nur der erste Teilraum 16 sondern auch der zweite Teilraum 18 gegenüber der Umgebung durch eine Gummimembran 34 abgeschlossen. An der Außenseite dieser Membran 34 befinden sich noppen- bzw. warzenartige Vorsprünge 36 oder axiale und/oder radiale Rillen, die die Membran 34 in einem variablen Abstand von dem Federelement 4 halten und so eine luftgepolsterte, elastische Ankopplung der Membran 34 an das gummielastische Federelement 4 bilden. Die Membran 34 steht mit dem Rückschlagventil 32, welches den Hohlraum 22 gegen das Luftpolster 38 absperren kann, in Wirkverbindung. Der Hohlraum 22 ist über den Ausströmkanal 40 mit dem Außenraum verbunden.

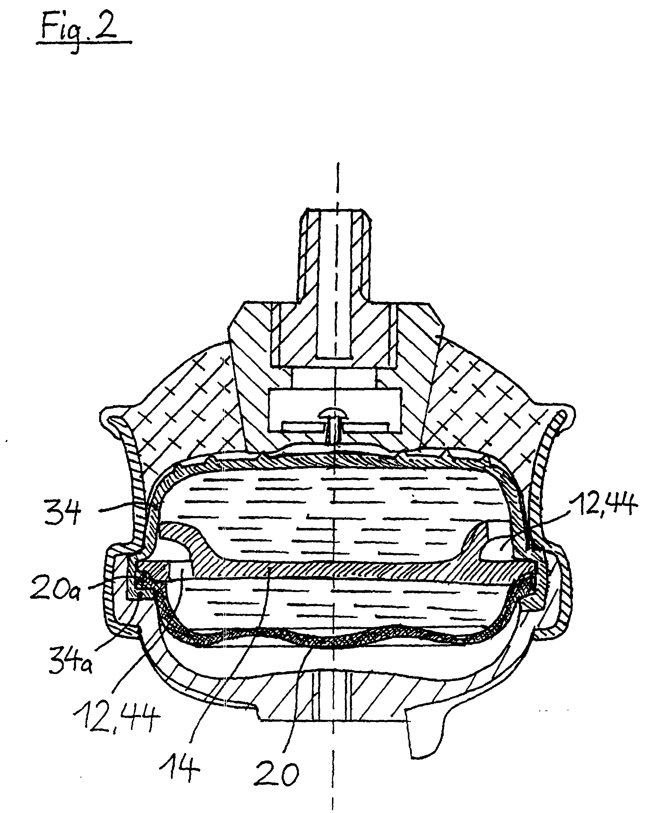

Bei der in den Figuren 1 und 2 dargestellten Ausführungsformen der Erfindung erfolgt der Wechsel zwischen den Betriebszuständen gedämpft/ungedämpft in Abhängigkeit von der Größe der Amplituden der anfallenden Schwingungen, wobei bei großen Amplituden die dämpfende Wirkung der Hydraulikkammer voll zur Wirkung gelangt. Das extrem weich abgestimmte Luftpolster hat eine Sperrwirkung gegenüber im Hörbereich auftretende Schwingungen.

Die mit Drosselöffnung 12 versehene Trennwand 14 ist in Fig. 1 als zweiteilige 14a, 14b, mit Ringkanal 44 versehene Drosseleinheit ausgebildet.

Die Fig. 2 zeigt eine Ausführungsform mit einteilig ausgeführter Drosseleinheit, wobei eine einteilige Trennwand 14 in die umschlingenden Ränder 20a, 34a der Membranen 20, 34 eingeknüpft ist.

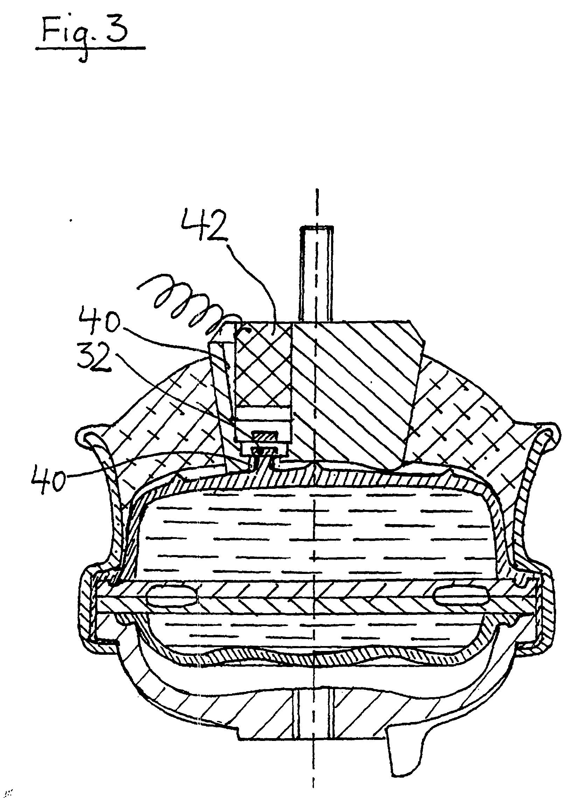

Entsprechend der in Fig. 3 dargestellten Ausführungsform der Erfindung kann der Ausströmkanal 40 mit einer verschließbaren Regeleinrichtung (Schaltelement, Schaltventil) 42 versehen sein. Dabei kann der Wechsel zwischen den Betriebszuständen gedämpft/ungedämpft willkürlich, beispielsweise mit Hilfe von einem vom Armaturenbrett zu schaltenden Magnetventil 42 oder aber auch selbsttätig, etwa über einen Bordrechner in Abhängigkeit von vorgegebenen Parametern vorgenommen werden.

Selbstschaltendes Hydrauliklager mit akustischer Abkopplung

### Bezugszeichenliste

- 2: Hydrauliklager
- 4: Federelement
- 4a: membranartige Verlängerung des Federelements 4
- 6a,: 6b unteres Anschlußstück
- 8: oberes Anschlußstück
- 10: Dämpfungskammer, Dämpfungsflüssigkeit
- 12: Drosselöffnung
- 14: Trennwand
- 14a,: 14b zweiteilige Trennwand
- 16: erster (unterer) Teilraum
- 18: zweiter (oberer) Teilraum
- 20: Gummimembran
- 20a: Rand der Gummimembran 20
- 22: Hohlraum
- 24: Anschlagscbeibe
- 26: Auflage
- 28: Freiwegraum
- 30: Durchbrechungen, Öffnungen
- 30a: enge öffnung
- 32: Rückschlagventil
- 34: Gummimembran
- 34a: Rand der Gummimembran 34
- 36: noppen- oder warzenartige Vorsprünge
- 38: Luftpolster
- 40: Ausströmkanal
- 42: Regeleinrichtung (Schaltmagnet, Schaltventil)
- 44: Ringkanal

## Patentansprüche

1. Selbstschaltendes Hydrauliklager (2) mit akustischer Abkopplung,
insbesondere für den Antriebsmotor von Kraftfahrzeugen, mit einem hohlkegeligen gummielastischen Federelement (4), das zwischen einem unteren (6a, 6b) und einem oberen Anschlußstück (8) befestigt ist,
mit einer hydraulischen Dämpfungseinrichtung in Form einer mit einer Dämpfungsflüssigkeit (10) gefüllten und durch eine mit einer Drosselöffnung (12) versehenen Trennwand (14) in zwei Teilräume (16, 18) unterteilten Dämpfungskammer,
wobei der erste Teilraum (16) durch eine balgartige, leicht verformbare Gummimembran (20) abgeschlossen ist,
und mit einem außerhalb der Dämpfungskammer (16, 18) in dem oberen Anschlußstück (8) befindlichen luftgefüllten Hohlraum (22),
wobei sich an der dem oberen Teilraum (18) der Dämpfungskammer (16, 18) zugewandten Seite des Hohlraums (22) eine Anschlagscheibe (24) befindet, in die ein Rückschlagventil (32) eingelassen ist,
**dadurch gekennzeichnet,**
**daß** der zweite, obere Teilraum (18) ebenfalls durch eine biegsame Membran (34) abgeschlossen ist, die zum Federelement (4) hin ein Luftpolster (38) derart bildet, daß mittels an der Außenseite dieser Membran (34) befindlicher noppen- bzw. warzenartiger Vorsprünge (36) oder axialer und/oder radialer Rillen eine luftgepolsterte, elastische Ankopplung der Membran (34) an das gummielastische Federelement (4) und an die Anschlagscheibe (24) gegeben ist,
und **daß** der Hohlraum (22) einerseits über das in Richtung des Luftpolsters (38) verschließbare und über die Membran (34) betätigbare Rückschlagventil (32) mit dem Luftpolster (38) und andererseits über einen Ausströmkanal (40) mit dem Außenraum verbunden ist.

2. Hydrauliklager nach Anspruch 1,
**dadurch gekennzeichnet,**
**daß** die mit Drosselöffnung versehene Trennwand eine zweiteilige (14a, 14b), mit Ringkanal (44) versehene Drosseleinheit ist.

3. Hydrauliklager nach Anspruch 1,
**dadurch gekennzeichnet,**
**daß** die mit Drosselöffnung versehene Trennwand eine einteilige (14), mit Ringkanal (44) versehene Drosseleinheit ist, die in die umschlingenden Ränder (20a, 34a) der Membranen (20, 34) eingeknöpft ist.

4. Hydrauliklager nach einem der vorhergehenden Ansprüche,
**dadurch gekennzeichnet,**
**daß** der Ausströmkanal (40) mittels einer Regeleinrichtung (42) verschließbar ist.

## Claims

1. Automatically switching hydraulic bearing (2) with acoustic uncoupling, more especially for the driving engine of automotive vehicles,
said bearing having a hollow-conical, rubber-elastic resilient element (4), which is mounted between a lower connection piece (6a, 6b) and an upper connection piece (8),
a hydraulic damping arrangement in the form of a damping chamber, which is filled with a damping fluid (10) and is divided into two partial chambers (16, 18) by a dividing wall (14) which is provided with a shut-off aperture (12), the first partial chamber (16) being terminated by a bellows-like, easily deformable rubber diaphragm (20),
and an air-filled cavity (22), which is situated externally of the damping chamber (16, 18) in the upper connection piece (8), a stop disc (24) being situated on the side of the cavity (22) facing the upper partial chamber (18) of the damping chamber (16, 18), and a non-return valve (32) being provided in said disc, **characterised in that** the second upper partial chamber (18) is also terminated by a flexible diaphragm (34) and forms, in the direction towards the resilient element (4), an air cushion (38) in such a manner that there is an air-cushioned elastic connection between the diaphragm (34) and the rubber-elastic resilient element (4) and the stop disc (24) by means of knub-like or nodular projection members (36) or axial and/or radial grooves situated on the outside of this diaphragm (34), and **in that** the cavity (22) is connected, on the one hand, to the air cushion (38) via the non-return valve (32), which is closable in the direction of the air cushion (38) and is actuatable via the diaphragm (34), and, on the other hand, to the outside area via an outlet duct (40).

2. Hydraulic bearing according to claim 1, **characterised in that** the dividing wall, which is provided with the shut-off aperture, is a two-piece (14a, 14b) shut-off unit provided with annular duct (44).

3. Hydraulic bearing according to claim 1, **characterised in that** the dividing wall, which is provided with the shut-off aperture, is a one-piece (14) shut-off unit which is provided with annular duct (44) and is fitted into the surrounding edges (20a, 34a) of the diaphragms (20, 34).

4. Hydraulic bearing according to one of the preceding claims, **characterised in that** the outlet duct (40) is closable by means of a regulating arrangement (42).

## Revendications

1. Palier de support hydraulique (2) à commutation automatique, avec découplage acoustique, notamment destiné au moteur d'entraînement de véhicules automobiles,
comprenant un élément de ressort élastique (4) en caoutchouc, de forme conique creuse, qui est fixé entre une pièce de raccord supérieure (8) et une pièce de raccord inférieure (6a, 6b),
comprenant un dispositif d'amortissement hydraulique sous la forme d'une chambre d'amortissement remplie de fluide d'amortissement (10) et subdivisée en deux compartiments partiels (16, 18) par une paroi de séparation (14) pourvue d'une ouverture d'étranglement (12),
le premier compartiment partiel (16) étant fermé par une membrane de caoutchouc (20) du type soufflet, facilement déformable,
et comprenant une cavité (22) remplie d'air et se trouvant dans la pièce de raccord supérieure (8), à l'extérieur de la chambre d'amortissement (16, 18),
un disque de butée (24, dans lequel est encastré un clapet anti-retour (32), se trouvant sur le côté de la cavité (22) dirigé vers le compartiment partiel supérieur (18) de la chambre d'amortissement (16, 18),
**caractérisé en ce que** le second compartiment partiel (18), supérieur, est également fermé par une membrane flexible (34) et forme en direction de l'élément de ressort (4), un coussin d'air (38) de façon telle, que soit réalisé un couplage élastique, amorti par coussin d'air, de la membrane (34) à l'élément de ressort élastique (4) en caoutchouc et au disque de butée (24), au moyen de protubérances (36) en forme d'excroissance ou de bouton, ou de stries axiales et/ou radiales,
et **en ce que** la cavité (22) est reliée, d'une part au coussin d'air (38) par l'intermédiaire du clapet anti-retour (32) se fermant en direction du coussin d'air (38) et pouvant être actionné par la membrane (34), et d'autre part à l'environnement extérieur par l'intermédiaire d'un canal d'écoulement de sortie (40).

2. Palier de support hydraulique selon la revendication 1, **caractérisé en ce que** la paroi de séparation pourvue de l'ouverture d'étranglement, est une unité d'étranglement en deux parties (14a, 14b) pourvue d'un canal annulaire (44).

3. Palier de support hydraulique selon la revendication 1, **caractérisé en ce que** la paroi de séparation pourvue de l'ouverture d'étranglement, est une unité d'étranglement en une partie (14) pourvue d'un canal annulaire (44), qui est sertie dans les bords (20a, 34a) imbriqués des membranes (20, 34).

4. Palier de support hydraulique selon l'une dea revendications précédentes, **caractérisé en ce que** le canal d'écoulement de sortie (40) peut être fermé au moyen d'un dispositif de régulation (42).
